# NEW EUROPEAN PATENT SPECIFICATION

(11) **EP 2 809 927 B2**
(45) Date of publication and mention of the opposition decision: **25.11.2020**
(45) Mention of the grant of the patent: 01.11.2017
(21) Application number: 12867609.5
(22) Date of filing: 23.12.2012
(51) Int. Cl.: F02C 3/113, F02C 9/28, F02C 7/00, F02K 3/00

(54) **SPEED SENSOR PROBE LOCATION IN GAS TURBINE ENGINE**
GESCHWINDIGKEITSSENSORSONDENSTANDORT IN EINEM GASTURBINENMOTOR
EMPLACEMENT DE SONDE DE CAPTEUR DE VITESSE DANS UNE TURBINE À GAZ

(30) Priority: 31.01.2012 US 201261593177 P
(43) Date of publication of application: 10.12.2014
(73) Proprietor: Raytheon Technologies Corporation, Farmington, CT 06032 (US)
(72) Inventor: DAVIS, Todd A., Tolland Connecticut 06084 (US); CIGAL, Brian P., Windsor Connecticut 06095 (US)
(74) Representative: Dehns
(86) International application number: PCT/US2012/071553
(87) International publication number: WO 2013/115921

(56) References cited:
- EP-A2- 1 918 527
- US-A- 4 075 562
- US-A- 4 716 723
- US-A- 4 854 120
- US-B1- 6 393 355
- GUNSTON JANE'S AERO-ENGINES March 2000, PRATT & WHITNEY/USA, pages 510 - 512, XP008174951

## Description

### CROSS-REFERENCE TO RELATED APPLICATION

This application claims priority to United States Provisional Patent Application No. 61/593,177, filed January 31, 2012.

### BACKGROUND

This disclosure relates to gas turbine engines and, more particularly, to the location of a speed sensor probe in a gas turbine engine.

A typical turbofan engine includes a compressor section and a turbine section that is coupled to drive the compressor section and a fan of the engine. In a two-spool engine design, a high pressure turbine is coupled through a high spool to drive a high pressure compressor and a low pressure turbine is coupled through a low spool to drive a low pressure compressor. Typically, a probe is mounted in the engine to determine the speed of at least one of the spools. One challenge in determining the location of the probe in the engine includes packaging concerns with regard to the engine architecture. Another challenge is to mount the speed sensor probe in a location that can detect or mitigate certain engine events can cause an over-speed condition.

As gas turbine engine having the features of the preamble of claim 1 is disclosed in EP 1918 527 A2.

### SUMMARY

A gas turbine engine according to the present invention is set forth in claim 1.

In a non-limiting embodiment of the foregoing, the first compressor has three stages.

In a further non-limiting embodiment of any of the foregoing examples, the first turbine has a maximum rotor diameter D1 and the fan has a fan diameter D2 such that a ratio D1/D2 is less than 0.6.

In a further non-limiting embodiment of any of the foregoing examples, the speed sensor probe is stationary relative to the first spool.

A further non-limiting embodiment of any of the foregoing examples includes at least one sensor target coupled to rotate with the first spool.

In a further non-limiting embodiment of any of the foregoing examples, the gas turbine engine includes a bearing forward of the first axial position, the bearing supporting the first spool relative to the engine central axis.

A method of operating a gas turbine engine, according to the present invention is set forth in claim 7

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 illustrates an example gas turbine engine.
Figure 2 schematically illustrates the gas turbine engine of Figure 1.
Figure 3 illustrates a portion of a gas turbine engine that includes a speed sensor probe.

### DETAILED DESCRIPTION OF THE PREFERRED EMBODIMENT

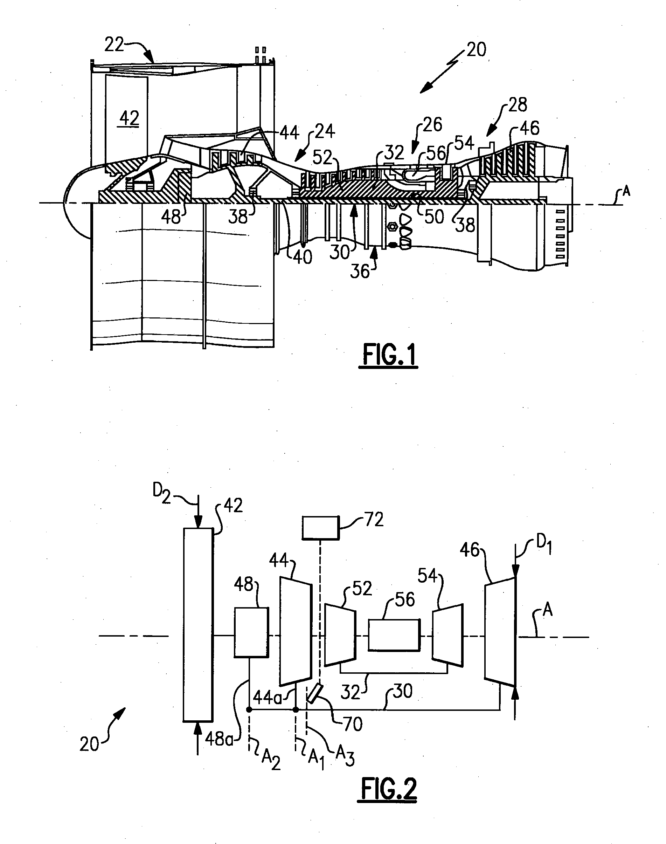

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 44 and a first turbine 46. In the example shown, the first compressor 44 has three stages. The first shaft 40 is connected to the fan 42 through a gear assembly of a fan drive gear system 48 to drive the fan 42 at a lower speed than the first spool 30. The second spool 32 includes a second shaft 50 that interconnects a second compressor 52 and second turbine 54. The first spool 30 runs at a relatively lower pressure than the second spool 32. It is to be understood that "low pressure" and "high pressure" or variations thereof as used herein are relative terms indicating that the high pressure is greater than the low pressure. An annular combustor 56 is arranged between the second compressor 52 and the second turbine 54. The first shaft 40 and the second shaft 50 are concentric and rotate via bearing systems 38 about the engine central axis A which is collinear with their longitudinal axes.

The core airflow is compressed by the first compressor 44 then the second compressor 52, mixed and burned with fuel in the annular combustor 56, then expanded over the second turbine 54 and first turbine 46. The first turbine 46 and the second turbine 54 rotationally drive, respectively, the first spool 30 and the second spool 32 in response to the expansion.

In a further example, the engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. In a further embodiment, the first turbine 46 has a maximum rotor diameter D 1 (Figure 2) and the fan 42 has a fan diameter D2 such that a ratio of D1/D2 is less than 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 feet, with the engine at its best fuel consumption. To make an accurate comparison of fuel consumption between engines, fuel consumption is reduced to a common denominator, which is applicable to all types and sizes of turbojets and turbofans. The term is thrust specific fuel consumption, or TSFC. This is an engine's fuel consumption in pounds per hour divided by the net thrust. The result is the amount of fuel required to produce one pound of thrust. The TSFC unit is pounds per hour per pounds of thrust (1b/hr/1b Fn). When it is obvious that the reference is to a turbojet or turbofan engine, TSFC is often simply called specific fuel consumption, or SFC. "Low fan pressure ratio" is the pressure ratio across the fan blade alone, without a Fan Exit Guide Vane system. The low fan pressure ratio as disclosed herein according to one non-limiting embodiment is less than about 1.45. "Low corrected fan tip speed" is the actual fan tip speed in feet per second divided by an industry standard temperature correction of [(Tambient degree Rankine) / 518.7)^0.5]. The "Low corrected fan tip speed" as disclosed herein according to one non-limiting embodiment is less than about 1150 feet per second.

Figure 2 schematically illustrates selected components of the above-described gas turbine engine 20. As shown, the first spool 30 is coupled at a first axial position A₁ to a compressor hub 44a that is coupled to drive the first compressor 44. The first spool 30 is also coupled at a second axial position A₂ to a fan drive gear system input coupling 48a to drive the gear assembly of the fan drive gear system 48. The gas turbine engine 20 further includes a speed sensor probe 70 that is operable to determine a rotational speed of the first spool 30. The speed sensor probe 70 is located at an axial position A₃ that is axially aft of the first axial position A₁ and the second axial position A₂, and the speed sensor probe 70 is fixed or stationary relative to the first spool 30. According to the invention, the axial position A₃ is also forward of the second compressor 52 and annular combustor 56 and axially aft of the first compressor 44. It is to be understood that relative positional terms, such as "forward," "aft," "upper," "lower," "above," "below," and the like are relative to the normal operational attitude of the gas turbine engine 20 and should not be considered otherwise limiting.

The location of the speed sensor probe at the axial position A₃ ensures that that gas turbine engine 20 will be protected from an over-speed condition in the event that either of the first compressor 44 or the fan drive gear system 48 becomes decoupled from the first spool 30. For example, if the compressor hub 44a or the fan drive gear system input coupling 48a fail, there will be a reduction in driven mass that causes the rotational speed of the first spool 30 to increase. If the speed increase is too great, the first turbine 46 can be damaged or fail. By locating the speed sensor probe 70 at the axial position A₃ that is axially aft of the first axial position A₁ and the second axial position A₂, the actual over-speed condition of the first spool 30 can be detected in an event that causes decoupling. In comparison, if a speed sensor probe was positioned forward of axial position A₁ or forward of axial position A₂, the speed sensor probe would not be able to properly detect an over-speed condition caused by the first spool 30 becoming decoupled at the compressor hub 44a or fan drive gear system input coupling 48a because the speed sensor probe would be reading the rotational speed from a decoupled component. Thus, the reading would not reflect the actual speed of the first spool 30.

The speed sensor probe 70 is in communication with a controller 72, such as a full authority digital engine control. The speed sensor probe 70 generates a signal that is proportional to the detected speed of the first spool 30 and sends the signal to the controller 72. In one example method, in response to detecting a rotational speed that exceeds a predetermined threshold rotational speed (i.e., an over-speed condition), the controller 72 decreases a fuel supply to the annular combustor 56. In a further example, in response to the over-speed condition, the controller 72 ceases the fuel supply to the combustor 56. By decreasing or ceasing the fuel supply to the combustor 56, less energy is provided to the first turbine 46. As a result, the speed of the first turbine 46 and first spool 30 decreases.

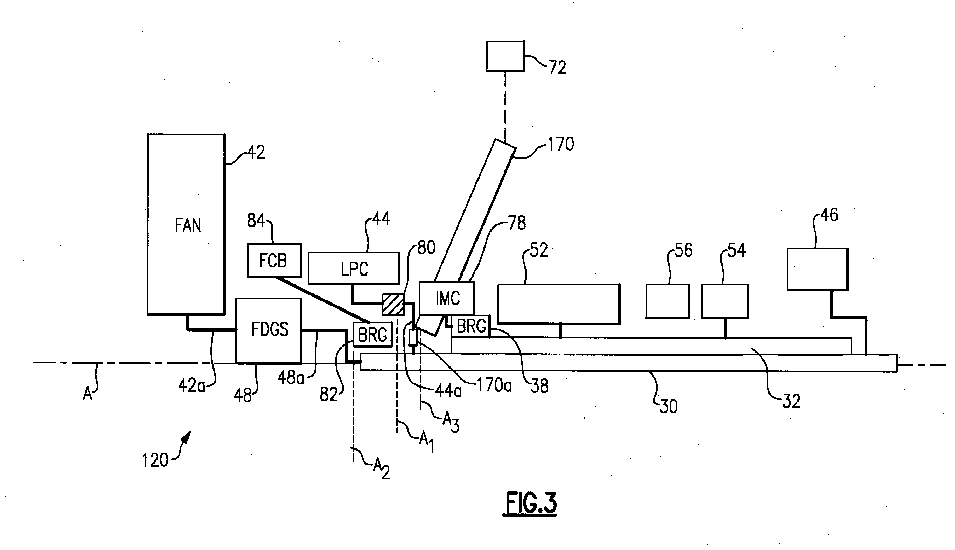

Figure 3 illustrates selected portions of another example gas turbine engine 120 that has a similar engine architecture as the gas turbine engine 20 of Figures 1 and 2. In this example, the first spool 30 is coupled at the first axial position A₁ to the compressor hub 44a, which is coupled to drive the first compressor 44. The first spool 30 is also coupled at the second axial position A₂ to the fan drive gear system input coupling 48a, which is coupled to drive the fan drive gear system 48. A speed sensor probe 170 is located at the third axial position A₃ that is axially aft of the first axial position A₁ and the second axial position A₂. The speed sensor probe 170 is mounted to and accessible through an intermediate case 78.

At least one sensor target 170a is coupled to rotate with the first spool 30. In one example, the at least one sensor target 170a includes a plurality of sensor targets 170a. In an embodiment, the sensor target 170a includes slots or teeth such that rotation of the slots or teeth can be detected by a hall-effect sensor in the speed sensor probe 170. The speed sensor probe 170 generates a signal that is proportional to the detected speed and sends the signal to the controller 72.

In this example, the first spool 30 is coupled to the compressor hub 44a at a splined connection 80, which also defines the first axial position A₁. The first spool 30 is supported by a bearing 82, which is fixed relative to front center body case 84 and positions the first spool 30 relative to the engine central axis A. The fan drive gear system input coupling 48a extends forward from the bearing 82 and is coupled at its forward end to the fan drive gear system 48. Rotation of the first spool 30 drives the fan drive gear system input coupling 48a, which drives the fan drive gear system 48.

As described above, decoupling of the first compressor 44 at the compressor hub 44a from the first spool 30 or decoupling of the fan drive gear system input coupling 48a from the first spool 30 reduces the driven mass of the first spool 30 and first turbine 46. By positioning the speed sensor probe 170 at axial position A₃ axially aft of axial position A₁ and axial position A₂, an over-speed condition can be properly determined.

In this example, in a decoupling event at the compressor hub 44a or the fan drive gear system input coupling 48a, the bearing 82 maintains the position of the first spool 30 with regard to the engine central axis A. Thus, the first spool 30 continues to rotate in the decoupling event. In comparison, if the first spool 30 decouples at a position that is axially aft of axial position A₁, the bearing 82 would not maintain the axial alignment of the first spool 30. The first spool 30 would misalign such that rotating and static hardware would mesh to slow or stop the rotation of the first spool 30 and first turbine 46. Thus, there is no need to locate the speed center probe 170 farther axially aft of the axial positions A₁ and A₂. Moreover, locating the speed sensor probe 170 forward of axial positions A₁ and A₂ would not enable the speed sensor probe 170 to properly detect the actual speed of the first spool 30 should a decoupling event occur at the compressor hub 44a or the fan drive gear system input coupling 48a.

In a further example, the location of the speed sensor probe 70 at the axial position A₃ also facilitates assembly of the gas turbine engine 20/120, maintenance and the like. An example method of assembling the gas turbine engine 20/120 includes affixing the speed sensor probe 70/170 at the axial position A₃ that is axially aft of the first axial position A₁ and the second axial position A₂. For instance, the speed sensor probe 70/170 is periodically replaced in the gas turbine engine 20/120 as regular maintenance or if the speed sensor probe 70/170 becomes damaged. Thus, the used speed sensor probe 70/170 is removed and a new speed sensor probe 70/170 is affixed as a replacement.

In a further example, the speed sensor probe 70/170 is affixed at axial position A₃ using fasteners, such as bolts. In a replacement operation, the used speed sensor probe 70/170 is removed by electrically disconnecting the speed sensor probe 70/170 and removing the fasteners. Once removed, the new speed sensor probe 70/170 is installed into position, the fasteners are tightened and the new speed sensor probe 70/170 is electrically connected. In one further example, the axial position A₃ of the speed sensor probe 70/170 is accessible through one or more cowl doors.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A gas turbine engine (20; 120) comprising:
a fan (42);
a fan drive gear system (48) coupled to drive the fan about an engine central axis;
a compressor section (24) including a first compressor (44) and a second compressor (52); and
a turbine section (28) including:
a first turbine (46) coupled to drive a first spool (30), the first spool (30) being coupled at a first axial (A₁) position to a compressor hub (44a) that is coupled to drive the first compressor (44) and the first spool (30) being coupled at a second axial position (A₂) to a fan drive input shaft (48a) that is coupled to drive the fan drive gear system (48), and a second turbine (54) coupled through a second spool (32) to drive the second compressor (52); **characterised by** further providing:
a speed sensor probe (70; 170) operable to determine a rotational speed of the first spool (30), the speed sensor probe (70; 170) being located axially aft of the first axial position (A₁) and the second axial position (A₂);
the gas turbine engine including a controller (72) in communication with the speed sensor probe (70; 170), the controller (72) being operable to cease or decrease a fuel supply to a combustor (26) in response to a rotational speed of the first spool (30) exceeding a predetermined threshold rotational speed;
wherein the speed sensor probe (70; 170) is located axially forward of the second compressor (52); and wherein the speed sensor probe (70; 170) is located axially aft of the first compressor (44).

2. The gas turbine engine as recited in claim 1, wherein the first compressor (44) has three stages.

3. The gas turbine engine as recited in claim 1 or 2, wherein the first turbine (46) has a maximum rotor diameter D1 and the fan (42) has a fan diameter D2 such that a ratio D1/D2 is less than 0.6.

4. The gas turbine engine as recited in any preceding claim, wherein the speed sensor probe (70; 170) is stationary relative to the first spool.

5. The gas turbine engine as recited in any preceding claim, including at least one sensor target (170a) coupled to rotate with the first spool (30).

6. The gas turbine engine as recited in any preceding claim, including a bearing (82) forward of the first axial position (A₁), the bearing (82) supporting the first spool (30) relative to the engine central axis (A).

7. A method of operating a gas turbine engine (20; 120), the gas turbine engine including a compressor section (24) including a first compressor and a second compressor; and a turbine section (28) including:
a first turbine (46) coupled to drive a first spool (30), the first spool (30) being coupled at a first axial position (A₁) to a compressor hub (44a) that is coupled to drive the first compressor (44) and the first spool (30) being coupled at a second axial position (A₂) to a fan drive input shaft (48a) that is coupled to drive a fan drive gear system (48) that drives a fan (42) about an engine central axis;
and a second turbine (54), the second turbine (54) coupled through a second spool (32) to drive the second compressor (52), the method **characterised by** comprising:
determining a rotational speed of the first spool (30) at an axial location (A₃) that is axially aft of the first axial position (A₁) and the second axial position (A₂), wherein the axial location (A₃) is axially forward of the second compressor and axially aft of the first compressor; and
changing a fuel supply to a combustor (26) of the gas turbine engine (20; 120) in response to the rotational speed exceeding a predetermined threshold rotational speed;
the method including ceasing or decreasing the fuel supply in response to the rotational speed exceeding the predetermined threshold rotational speed.

## Patentansprüche

1. Gasturbinentriebwerk (20; 120), umfassend:
einen Lüfter (42);
ein Lüfterantriebsgetriebesystem (48), das gekoppelt ist, um den Lüfter um eine Mittelachse des Triebwerks anzutreiben;
einen Verdichterabschnitt (24), der einen ersten Verdichter (44) und einen zweiten Verdichter (52) beinhaltet; und
einen Turbinenabschnitt (28), der Folgendes beinhaltet:
eine erste Turbine (46), die gekoppelt ist, um eine erste Spule (30) anzutreiben, wobei die erste Spule (30) bei einer ersten axialen (A₁) Position an eine Verdichternabe (44a) gekoppelt ist, die gekoppelt ist, um den ersten Verdichter (44) anzutreiben, und wobei die erste Spule (30) bei einer zweiten axialen Position (A₂) an eine Lüfterantriebseingangswelle (48a) gekoppelt ist, die gekoppelt ist, um das Lüfterantriebsgetriebesystem (48) anzutreiben, und eine zweite Turbine (54) durch eine zweite Spule (32) gekoppelt ist, um den zweiten Verdichter (52) anzutreiben; **gekennzeichnet durch** ferner Bereitstellen:
einer Geschwindigkeitssensorsonde (70; 170), die betrieben werden kann, um eine Drehzahl der ersten Spule (30) zu bestimmen, wobei die Geschwindigkeitssensorsonde (70; 170) axial hinter der ersten axialen Position (A₁) und der zweiten axialen Position (A₂) liegt;
wobei das Gasturbinentriebwerk eine Steuerung (72) in Verbindung mit der Geschwindigkeitssensorsonde (70; 170) beinhaltet, wobei die Steuerung (72) betrieben werden kann, um eine Kraftstoffzufuhr zu einer Brennkammer (26) als Reaktion auf eine Drehzahl der ersten Spule (30), die eine Drehzahl mit vorbestimmtem Schwellenwert überschreitet, zu beenden oder zu verringern;
wobei sich die Geschwindigkeitssensorsonde (70; 170) axial vor dem zweiten Verdichter (52) befindet; und wobei sich die Geschwindigkeitssensorsonde (70; 170) axial hinter dem ersten Verdichter (44) befindet.

2. Gasturbinentriebwerk nach Anspruch 1, wobei der erste Verdichter (44) drei Stufen aufweist.

3. Gasturbinentriebwerk nach Anspruch 1 oder 2, wobei die erste Turbine (46) einen maximalen Rotordurchmesser D1 aufweist und der Lüfter (42) einen Lüfterdurchmesser D2 aufweist, sodass ein D1:D2-Verhältnis kleiner als 0,6 ist.

4. Gasturbinentriebwerk nach einem der vorhergehenden Ansprüche, wobei die Geschwindigkeitssensorsonde (70; 170) in Bezug auf die erste Spule ortsfest ist.

5. Gasturbinentriebwerk nach einem der vorhergehenden Ansprüche, das mindestens ein Sensorziel (170a) beinhaltet, das gekoppelt ist, um sich mit der ersten Spule (30) zu drehen.

6. Gasturbinentriebwerk nach einem der vorhergehenden Ansprüche, das ein Lager (82) vor der ersten axialen Position (A₁) beinhaltet, wobei das Lager (82) die erste Spule (30) in Bezug auf die Mittelachse (A) des Triebwerks trägt.

7. Verfahren zum Betreiben eines Gasturbinentriebwerks (20; 120), wobei das Gasturbinentriebwerk einen Verdichterabschnitt (24) beinhaltet, der einen ersten Verdichter und einen zweiten Verdichter beinhaltet; und wobei ein Turbinenabschnitt (28) Folgendes beinhaltet:
eine erste Turbine (46), die gekoppelt ist, um eine erste Spule (30) anzutreiben, wobei die erste Spule (30) bei einer ersten axialen Position (A₁) an eine Verdichternabe (44a) gekoppelt ist, die gekoppelt ist, um den ersten Verdichter (44) anzutreiben, und wobei die erste Spule (30) bei einer zweiten axialen Position (A₂) an eine Lüfterantriebseingangswelle (48a) gekoppelt ist, die gekoppelt ist, um ein Lüfterantriebsgetriebesystem (48) anzutreiben, das einen Lüfter (42) um eine Mittelachse des Triebwerks antreibt;
und eine zweite Turbine (54), wobei die zweite Turbine (54) durch eine zweite Spule (32) gekoppelt ist, um den zweiten Verdichter (52) anzutreiben, wobei das Verfahren **dadurch gekennzeichnet ist, dass** es Folgendes umfasst:
Bestimmen einer Drehzahl der ersten Spule (30) bei einer axialen Stelle (A₃), die axial hinter der ersten axialen Position (A₁) und der zweiten axialen Position (A₂) liegt, wobei die axiale Stelle (A₃) axial vor dem zweiten Verdichter und axial hinter dem ersten Verdichter liegt; und
Ändern einer Kraftstoffzufuhr zu einer Brennkammer (26) des Gasturbinentriebwerks (20; 120) als Reaktion darauf, dass die Drehzahl eine Drehzahl mit vorbestimmtem Schwellenwert überschreitet;
wobei das Verfahren ein Beenden oder Verringern der Kraftstoffzufuhr als Reaktion darauf, dass die Drehzahl die Drehzahl mit vorbestimmtem Schwellenwert überschreitet, beinhaltet.

## Revendications

1. Turbine à gaz (20 ; 120) comprenant :
une soufflante (42) ;
un système d'engrenage d'entraînement de soufflante (48) couplé pour entraîner la soufflante autour d'un axe central de moteur ;
une section de compresseur (24) comportant un premier compresseur (44) et un second compresseur (52) ; et
une section turbine (28) comportant :
une première turbine (46) couplée pour entraîner une première bobine (30), la première bobine (30) étant couplée dans une première position axiale (A₁) à un moyeu de compresseur (44a) qui est couplé pour entraîner le premier compresseur (44) et la première bobine (30) étant couplée dans une seconde position axiale (A₂) à un arbre d'entrée d'entraînement de soufflante (48a) qui est couplé pour entraîner le système d'engrenage d'entraînement de soufflante (48) et une seconde turbine (54) couplée à travers une seconde bobine (32) pour entraîner le second compresseur (52) ; **caractérisée par** la fourniture en outre :
d'une sonde de capteur de vitesse (70 ; 170) pouvant être utilisée pour déterminer une vitesse de rotation de la première bobine (30), la sonde de capteur de vitesse (70 ; 170) étant située axialement en arrière de la première position axiale (A₁) et de la seconde position axiale (A₂) ;
la turbine à gaz comportant un dispositif de commande (72) en communication avec la sonde de capteur de vitesse (70 ; 170), le dispositif de commande (72) pouvant être utilisé pour interrompre ou diminuer une alimentation en carburant d'une chambre de combustion (26) en réponse au fait qu'une vitesse de rotation de la première bobine (30) dépasse une vitesse de rotation seuil prédéterminée ;
dans laquelle la sonde de capteur de vitesse (70 ; 170) est située axialement en avant du second compresseur (52) ; et dans laquelle la sonde de capteur de vitesse (70 ; 170) est située axialement en arrière du premier compresseur (44).

2. Turbine à gaz selon la revendication 1, dans laquelle le premier compresseur (44) a trois étages.

3. Turbine à gaz selon la revendication 1 ou 2, dans laquelle la première turbine (46) a un diamètre de rotor maximal D1 et la soufflante (42) a un diamètre de soufflante D2 de sorte qu'un rapport D1/D2 est inférieur à 0,6.

4. Turbine à gaz selon une quelconque revendication précédente, dans laquelle la sonde de capteur de vitesse (70 ; 170) est fixe par rapport à la première bobine.

5. Turbine à gaz selon une quelconque revendication précédente, comportant au moins une cible de capteur (170a) couplée pour tourner avec la première bobine (30).

6. Turbine à gaz selon une quelconque revendication précédente, comportant un palier (82) en avant de la première position axiale (A₁), le palier (82) supportant la première bobine (30) par rapport à l'axe central de moteur (A).

7. Procédé de fonctionnement d'une turbine à gaz (20 ; 120), la turbine à gaz comportant une section de compresseur (24) comportant un premier compresseur et un second compresseur ; et une section turbine (28) comportant :
une première turbine (46) couplée pour entraîner une première bobine (30), la première bobine (30) étant couplée dans une première position axiale (A₁) à un moyeu de compresseur (44a) qui est couplé pour entraîner le premier compresseur (44) et la première bobine (30) étant couplée dans une seconde position axiale (A₂) à un arbre d'entrée d'entraînement de soufflante (48a) qui est couplé pour entraîner un système d'engrenage d'entraînement de soufflante (48) qui entraîne une soufflante (42) autour d'un axe central de moteur ;
et une seconde turbine (54), la seconde turbine (54) étant couplée à travers une seconde bobine (32) pour entraîner le second compresseur (52), le procédé étant **caractérisé en ce qu'**il comprend :
la détermination d'une vitesse de rotation de la première bobine (30) à un emplacement axial (A₃) qui est axialement en arrière de la première position axiale (A₁) et de la seconde position axiale (A₂), dans lequel l'emplacement axial (A₃) est axialement en avant du second compresseur et axialement en arrière du premier compresseur ; et
la modification d'une alimentation en carburant d'une chambre de combustion (26) de la turbine à gaz (20 ; 120) en réponse au fait que la vitesse de rotation dépasse une vitesse de rotation seuil prédéterminée ;
le procédé comportant l'interruption ou la diminution de l'alimentation en carburant en réponse au fait que la vitesse de rotation dépasse la vitesse de rotation seuil prédéterminée.
